Europäisches Patentamt

European Patent Office

Office européen des brevets

(19)

(11) Publication number: **0 261 777**
**A2**

(12) **EUROPEAN PATENT APPLICATION**

(21) Application number: **87306832.4**

(22) Date of filing: **31.07.87**

(51) Int. Cl.⁴: **G01F 11/26**

(30) Priority: **22.08.86 GB 8620526**
**11.10.86 GB 8624435**
**16.03.87 GB 8706172**

(43) Date of publication of application:
**30.03.88 Bulletin 88/13**

(84) Designated Contracting States:
**BE DE ES FR GB IT NL**

(71) Applicant: **Webster, Keith William Eustace**
**6 Lucks Lane**
**Buckden Cambridgeshire PE18 9TF(GB)**

(72) Inventor: **Webster, Keith William Eustace**
**6 Lucks Lane**
**Buckden Cambridgeshire PE18 9TF(GB)**

(74) Representative: **Maguire, Peter Albert et al**
**P.A. Maguire & Co. 12, The Broadway**
**St. Ives Huntingdon Cambridgeshire PE17**
**4BN(GB)**

(54) **Dose measuring container.**

(57) A dose measuring container (1) in the nature of a hand held utensil having an outlet (3) in which is slidably mounted a dose measuring cup (5) which can be moved to a limited extent between a position in which the cup can be filled from the contents (9) of the container and a position in which the contents (16) of the cup can be dispensed from the container, and wherein the cup is formed with a filling aperture (8) which also serves the function of defining the quantity of the contents of the cup, characterised in that when the cup (5) is in the filling position the filling aperture (8) is in communication with the interior of the container and when the cup is in the dispensing position the aperture (8) is sealed against communication with the interior of the container.

A dose measuring closure adapted to be mounted in the outlet (3) of a container (1) and comprising a dose measuring cup (5) which is capable of movement to a limited extent between a position in which the interior of the cup is in communication with the interior of the container and can be filled from the contents thereof and a position in which the interior of the cup is isolated from communication with the interior of the container and the contents of the cup can be dispensed, and wherein the cup is formed with a filling aperture (8) which also serves the function of defining the quantity of the contents of the cup, characterised in that the filling aperture (8) is disposed such that it is occluded by the container neck (10) or by an insert or collar (11) therein when the cup (5) is in its dispensing position.

FIG.1.

## DOSE MEASURING CONTAINER

### TECHNICAL FIELD

The invention relates to a dose measuring container or to a dose measuring closure for a container. More particularly the invention relates to a dose measuring container or dose measuring closure for a container in the nature of a hand held device or utensil.

The invention is primarily intended for use in dispensing liquids although it is envisaged that the container of the invention could be used to dispense measured doses of powders and other granular or particulate solids.

It is an object of the invention to provide a simple and reliable container having means for dispensing a measured quantity of its contents.

### BACKGROUND ART

Dose measuring containers are known, such as for example the familiar granular sugar dispenser which on inversion delivers a quantity of sugar. This known dispenser comprises a pouring spout which has a tubular extension projecting downwardly, when the container is in its inoperative, upright condition, into the vicinity of the bottom of the container. On inversion of the container some of the sugar enters the tubular extension and is dispensed from the pouring spout. The amount of sugar which is actually dispensed by such a device can vary considerably from dose to dose although this does not matter greatly in this particular application.

Simple piston pumps are sometimes provided in association with containers for dispensing viscous liquids and creams, e.g. soft soap, from containers but such pumps are of limited capacity and are not intended to deliver a measured quantity since the effective stroke of the pump can be varied intentionally or otherwise by the user. Where greater accuracy of dosage is required resort is often had to external devices such as measuring cups or spoons or to specialist devices such as the publican's spirit dispensing "optic".

It is known from GB 2166522A of Bettix Limited to provide a dispensing container for liquids which is moulded to define a main reservoir and a measuring chamber connected by a duct to the main reservoir whereby measuring and dispensing is achieved by successive tilting movements of the container.

It is also known from GB 2145061A of Colgate Palmolive Company to provide a measuring device for liquid products in bottles or the like containers which is constituted by the cap of the bottle and having first and second compartments one of which is filled on inverting the bottle, the arrangement being such that the second compartment is filled from the first when the bottle is returned to its normal position. The dose of liquid can then be dispensed from the second compartment on subsequent inversion of the bottle.

Furthermore it is known from GB 1219344 of English Glass Company Limited to provide a device for dispensing metered quantities of liquids arranged for attachment to the mouth of a container comprising two tubular body parts, one being slidable within the other, the device being closed at one end to form a dose measuring receptacle.

An object of the invention is to provide an improved dose measuring container or dose measuring closure for a container.

### DISCLOSURE OF INVENTION

According to the invention there is provided a dose measuring container in the nature of a hand held utensil having an outlet in which is slidably mounted a dose measuring cup which can be moved to a limited extent between a position in which the cup can be filled from the contents of the container and a position in which the contents of the cup can be dispensed from the container, and wherein the cup is formed with a filling aperture which also serves the function of defining the quantity of the contents of the cup, the arrangement being such that when the cup is in the filling position the filling aperture is in communication with the interior of the container and when the cup is in the dispensing position the aperture is sealed against communication with the interior of the container. Preferably the measuring cup is generally cylindrical and is a snug fit in the container outlet. The filling aperture may be disposed in the cylindrical wall of the cup. The filling aperture in the cup may be occluded by the container outlet or by an insert disposed in the container outlet when the cup is in its dispensing position.

The outer end of the cup may form a pouring spout. The measuring cup may be axially movable, and means may be provided for limiting its withdrawal from the container. These means may be in the form of protrusions on the measuring cup and which engage a neck portion of the container, or alternatively which engage an insert in the neck portion.

The dose measuring container preferably comprises an intermediate chamber provided within the container and arranged to surround the dose measuring cup, the intermediate chamber being fixed against movement in use. The interior of the intermediate chamber may be in constant communication with the interior of the container. The intermediate chamber may be formed as an integral part of the container, and may have a closed bottom. A cap may be provided to close the outlet of the container and the measuring cup when not in use or during inversion. The cap may be integral with the measuring cup.

From another aspect the invention is a dose measuring closure adapted to be mounted in the outlet of a container and comprising a dose measuring cup which is capable of movement to a limited extent between a position in which the interior of the cup is in communication with the interior of the container and can be filled from the contents thereof and a position in which the interior of the cup is isolated from communication with the interior of the container and the contents of the cup can be dispensed, and wherein the cup is formed with a filling aperture which also serves the function of defining the quantity of the contents of the cup, the filling aperture being disposed such that it is occluded by the container outlet or by an insert therein when the cup is in its dispensing position.

## BRIEF DESCRIPTION OF DRAWINGS

The invention is diagrammatically illustrated by way of example in the accompanying drawings in which:-

Figure 1a, b and c illustrate a first embodiment of the dose measuring container of the invention in three different positions;

Figure 2 is a cross-sectional side view of a portion of a container and showing a second embodiment of the invention;

Figures 3a and b are cross-sectional side views of a third embodiment of the invention in two different positions, and

Figures 4a, b and c are cross-sectional side views of a fourth embodiment of the invention in three different positions.

## BEST MODES FOR CARRYING OUT INVENTION

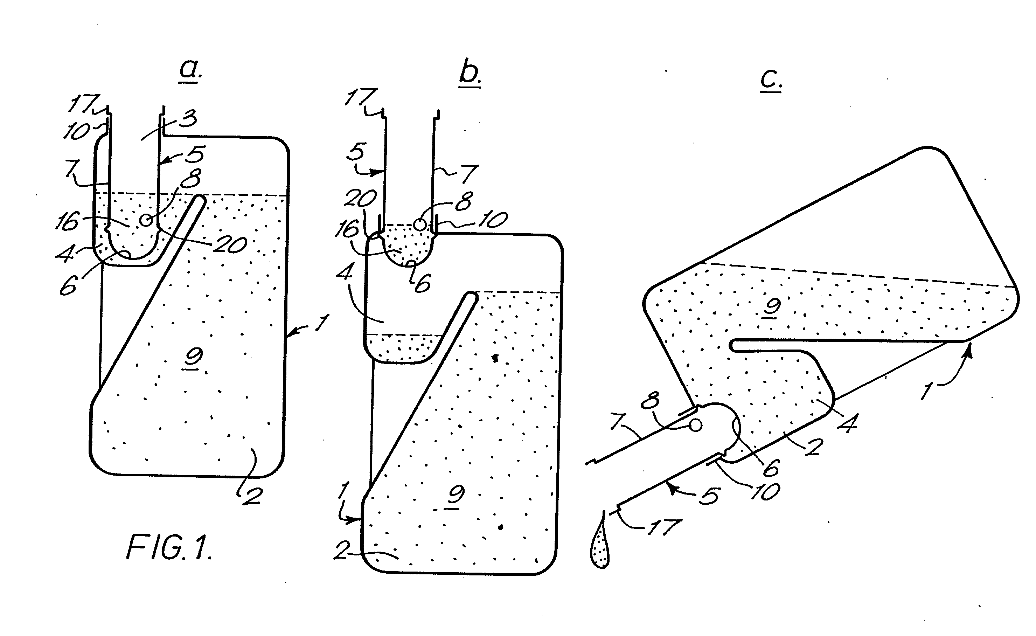

Referring to Figures 1a, 1b and 1c of the drawing there is shown a dose measuring container 1 which has a generally rectangular body 2 and which is formed in its upper surface with a neck 10 defining an outlet 3, below which is disposed an intermediate chamber 4 which is moulded integrally with the container. A dose measuring cup 5 is snugly mounted in the outlet 3 of the container so as to be movable between the inner position shown in Figure 1a and the outer position of Figure 1 b. The cup 5 is generally cylindrical and has a closed bottom 6. The wall 7 of the cup is perforated at 8 to form a filling aperture which also limits the extent to which the cup can be filled. Figure 1a illustrates the container in its filled state with the cup 5 in the full downward position. This would be the state for transit with an overcap (not illustrated) sealing the outlet 3. During use the overcap would be removed and the measuring cup pulled to the top of its travel as shown in Figure 1 b. Such travel of the cup 5 is limited by engagement of projections 20 on the cup with the neck 10 of the container. The measured quantity is then ready for pouring as shown in Figure 1c and in this inverted position the intermediate chamber is again refilled and remains so as the container is returned to the upright position.

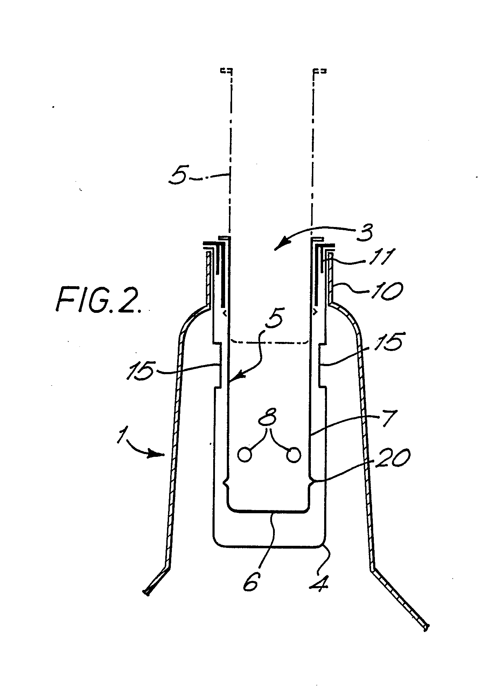

The dose measuring container 1 illustrated in Figure 2 of the drawings is generally similar to that described and shown in Figure 1 of the drawings but in this embodiment the intermediate chamber 4 is a separate generally cylindrical member having a closed bottom and which is inserted into the container 1 and fixed in the neck 10 of the container in any suitable way e.g. as a friction fit or by welding or by means of an adhesive. The interior of the intermediate chamber 4 is in communication with the interior of the container 1 via apertures 15 in its cylindrical wall. A spacer or collar 11 is inserted as a friction fit into the neck portion 10 of the container and the dose measuring cup 5 is a sliding friction fit within the spacer or collar. Small projections 20 are provided on the outer surface of the cup 5 to limit outward movement of the cup relative to the container. The cup is shown in dotted lines in its outer or pouring position, and in full lines in its inner position.

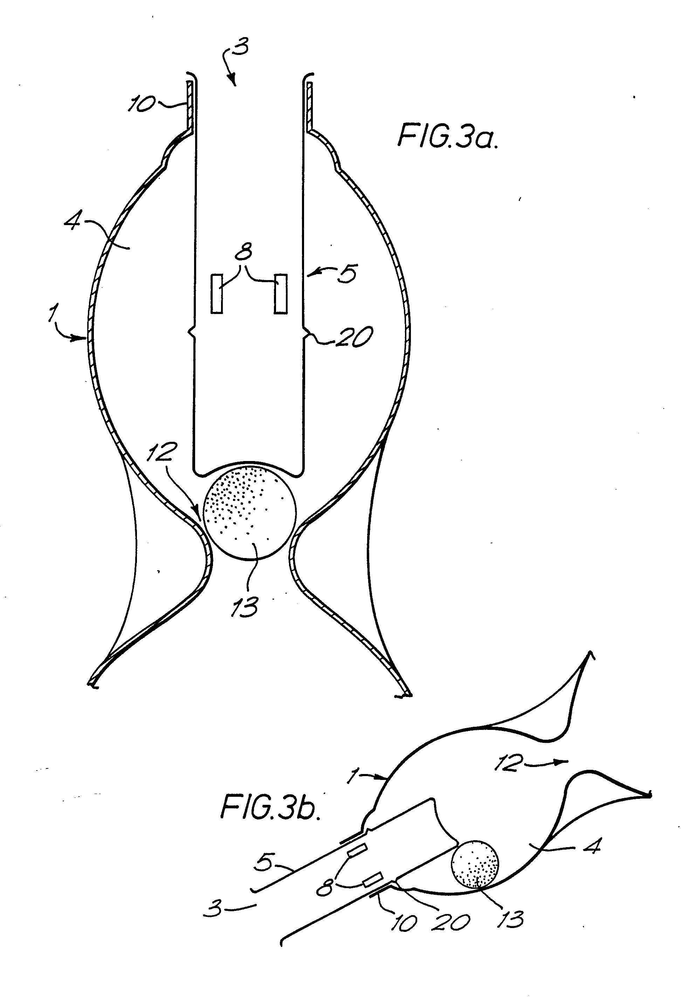

The embodiment of Figure 3 illustrates an arrangement suitable for plastics moulding in which the intermediate chamber 4 is integral with the container 1 and has an aperture 12 at its bottom under the control of a gravity actuated valve, in this case a glass ball 13, which is held in position to close the valve by the cup 5, when the cup is in its inner position. Thus liquid is retained in the intermediate chamber by the ball valve after temporary inversion of the container for long enough to charge the cup 5. In the position shown in Figure 3b, the dispensing cup 5 has been moved into its pouring position thus freeing the ball 13, which can move under gravity away from the aperture 12 to allow communication between the intermediate chamber and the interior of the container, to permit the intermediate chamber to be charged from the contents of the container.

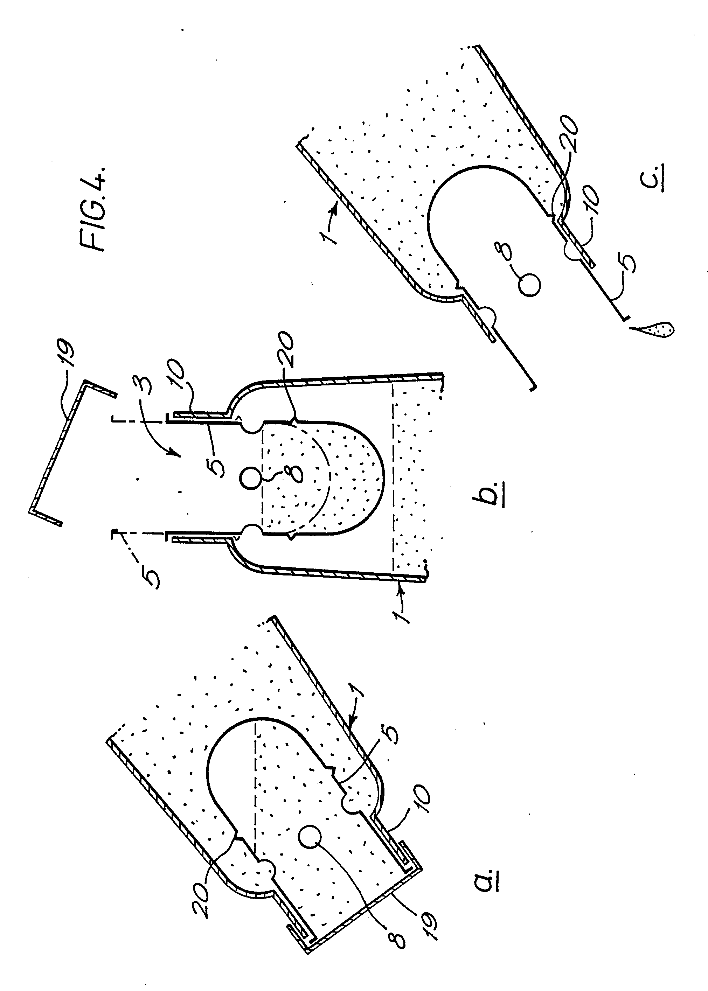

. The arrangement of Figure 4 is similar to that described above with reference to Figure 2 except that here the intermediate chamber has been omitted. In this embodiment an overcap 19 is shown in position on the container when the container is inverted temporarily to fill the dose measuring cup, see Figure 4a. After the container is returned to the upright position the overcap 19 is removed to permit the contents of the cup to be dispensed. At this stage the cup is moved into its outer or pouring position, as shown in Figure 4b Figure 4c illustrates a dose being dispensed. If desired the overcap 19 may be integral with the cup 5.

All of the arrangements described above are such that the dose measuring cup is generally cylindrical and can be moved axially from an inner position (see Figs. 1a, and 2, 3a, and 4a) in which the interior of the cup 5 is in communication with the interior of the container 1 via the apertures 8 (and 15 in the case of Figure 2) to an outer or pouring position as shown in Figures 1 b, 1c, in dotted outline in Figure 2, and in Figures 3b and 4c in which the series of charging apertures 8 in the cylindrical surface of the cup 5 are occluded by the neck portion 10 of the container or the insert or collar 11 disposed therein, in which position the contents of the cup can be dispensed. It will be appreciated that with the arrangements of Figures 1, 2 and 3, the intermediate chamber is charged when the container is inverted to dispense the contents of the dose measuring cup. Thus when the container is returned to its rest position and the cup pushed down into the container, the cup is charged from the contents of the intermediate chamber.

For reasons of illustration only, the measuring cup is shown in all of the drawings as a loose fit in the neck 10 of the container, or in the case of Figure 2, in the collar 11. It is confirmed however that cup should be a close sliding fit within the neck or collar to minimise leakage of the contents during the dispensing operation. It will be appreciated that in its inoperative position, the container is closed by an overcap, e.g. that shown at 19 in Figure 4 and that the fit between the cup and the container is of no consequence in this connection.

## INDUSTRIAL APPLICABILITY

The invention thus provides a simple and inexpensive dose measuring closure or container which is of wide use 20 in domestic and industrial situations.

## Claims

1. A dose measuring container (1) in the nature of a hand held utensil having an outlet (3) in which is slidably mounted a dose measuring cup (5) which can be moved to a limited extent between a position in which the cup can be filled from the contents (9) of the container and a position in which the contents (16) of the cup can be dispensed from the container, and wherein the cup is formed with a filling aperture (8) which also serves the function of defining the quantity of the contents of the cup, characterised in that when the cup (5) is in the filling position the filling aperture (8) is in communication with the interior of the container and when the cup is in the dispensing position the aperture (8) is sealed against communication with the interior of the container.

2. A dose measuring container according to claim 1, wherein the measuring cup (5) is generally cylindrical and is a snug fit in the container outlet (3).

3. A dose measuring container according to claim 2, wherein the filling aperture (8) is disposed in the cylindrical wall (7) of the cup (5).

4. A dose measuring container according to any preceding claim, wherein the filling aperture (8) in the cup (5) is occluded by the container neck (10) or by a collar or insert (11) disposed in the container outlet when the cup is in its dispensing position.

5. A dose measuring container according to any preceding claim, wherein the outer end (17) of the cup forms a pouring spout.

6. A dose measuring container according to any preceding claim, wherein the measuring cup (5) is axially movable, and wherein means (20) is provided for limiting its withdrawal from the container, the means being in the form of protrusions on the measuring cup and which engage a neck portion (10) of the container or an insert or collar (11) in the neck portion.

7. A dose measuring container according to any preceding claim, comprising an intermediate chamber (4) provided within the container (1) and arranged to surround the dose measuring cup (5), the intermediate chamber being fixed against movement in use.

8. A dose measuring container according to claim 7, wherein the interior of the intermediate chamber (4) is in constant communication with the interior of the container.

9. A dose measuring container according to claim 7 or claim 8, wherein the intermediate chamber (4) is formed as an integral part of the container (1).

10. A dose measuring container according to any one of claims 7 to 9, wherein the intermediate chamber (4) has a closed bottom.

11. A dose measuring container according to any preceding claim, comprising a cap (19) to close the outlet of the container and the measuring cup when not in use or during inversion.

12. A dose measuring closure adapted to be mounted in the outlet (3) of a container (1) and comprising a dose measuring cup (5) which is capable of movement to a limited extent between a position in which the interior of the cup is in communication with the interior of the container and can be filled from the contents thereof and a position in which the interior of the cup is isolated from communication with the interior of the container and the contents of the cup can be dispensed, and wherein the cup is formed with a filling aperture (8) which also serves the function of defining the quantity of the contents of the cup, characterised in that the filling aperture (8) is disposed such that it is occluded by the container neck (10) or by an insert or collar (11) therein when the cup (5) is in its dispensing position.

13. A dose measuring closure according to claim 12, comprising a removable cap (19) for closing the cup (5).

14. A dose measuring closure according to claim 12 or claim 13, wherein the measuring cup (5) is generally cylindrical and is adapted to be a snug fit in the container outlet (3).

15. A dose measuring closure according to claim 14, wherein the filling aperture (8) is disposed in the cylindrical wall of the cup (5).

16. A dose measuring closure according to any one of claims 12 to 15, comprising a collar or insert (11) arranged to be snugly received in the container outlet (3) and wherein the filling aperture in the cup is arranged to be occluded by the container neck (10) or by the collar or insert (11) disposed in the container outlet (3) when the cup (5) is in its dispensing position.

17. A dose measuring closure according to any one of claims 12 to 16, wherein the outer end (17) of the cup (5) forms a pouring spout.

18. A dose measuring closure according to any one of claims 12 to 17, wherein the measuring cup (5) is adapted to be axially movable relative to the container neck (10), and wherein means (20) is provided for limiting its withdrawal from the container, the means being in the form of protrusions on the measuring cup and which engage the neck (10) of the container or the collar or insert (11) in the neck portion.

19. A dose measuring closure according to any one of claims 12 to 18, comprising an intermediate chamber (4) arranged to surround the dose measuring cup (5), the intermediate chamber being arranged to be fixed against movement in use.

20. A dose measuring closure according to claim 19, wherein the interior of the intermediate chamber (4) is adapted for constant communication with the interior of the container.

21. A dose measuring closure according to claim 19 or claim 20, wherein the intermediate chamber (4) has a closed bottom.

22. A dose measuring closure according to any one of claims 19 to 21, wherein the intermediate chamber (4) is generally cylindrical and is adapted to be fixed in the neck (10) of a container (1) the arrangement being such that the cup (5) is axially slidable in the chamber (4), and the cylindrical wall of the chamber (4) being formed with an aperture (15) through which the interior of the chamber (4) communicates with the interior of the container (1).

FIG.1.

FIG.2.

FIG.3a.

FIG.3b.

FIG.4.

a.

b.

c.

0 261 777